# EUROPÄISCHE PATENTSCHRIFT

(11) **EP 1 222 805 B1**
(45) Veröffentlichungstag und Bekanntmachung des Hinweises auf die Patenterteilung: **02.07.2003**
(21) Anmeldenummer: 00963979.0
(22) Anmeldetag: 13.09.2000
(51) Int. Cl.: H04N 1/00

(54) **VORRICHTUNG ZUR VORLAGENBETRACHTUNG**
DEVICE FOR VIEWING DOCUMENTS
DISPOSITIF POUR CONTROLER LA POSITION D'UN ORIGINAL

(30) Priorität: 28.09.1999 DE 19946358
(43) Veröffentlichungstag der Anmeldung: 17.07.2002
(73) Patentinhaber: Heidelberger Druckmaschinen Aktiengesellschaft, 69115 Heidelberg (DE)
(72) Erfinder: LASSEN, Bernd, 24248 Mönkeberg (DE)
(86) Internationale Anmeldenummer: DE0003172
(87) Internationale Veröffentlichungsnummer: WO01024509

(56) Entgegenhaltungen:
- EP-A- 0 751 669
- DE-A- 19 534 334

## Beschreibung

Die Erfindung bezieht sich auf das Gebiet der elektronischen Reproduktionstechnik und betrifft eine Vorrichtung zur Betrachtung von Vorlagen in einem Flachbettscanner.

In einer Vorrichtung zur pixel- und zeilenweisen optoelektronischen Abtastung von Vorlagen, wie beispielsweise Bildern, Grafiken und Texten, werden die abzutastenden Vorlagen in elektrische Signale umgewandelt, die dann zur Verarbeitung in der elektronischen Reproduktionstechnik weiter in digitale Daten konvertiert werden. Eine solche Vorrichtung wird im folgenden auch als Scanner bezeichnet. Für den Fall, daß es sich um einen Flachbettscanner handelt, sind die Vorlagen auf einem ebenen Vorlagenträger angeordnet, und eine optoelektronische Abtasteinheit tastet die Vorlagen pixel- und zeilenweise ab, wobei sich der Vorlagenträger und die Abtasteinheit relativ zueinander bewegen. Die Abtasteinheit weist im wesentlichen eine Lichtquelle zur zeilenweisen Beleuchtung der Vorlage, einen optoelektronischen Wandler, beispielsweise eine Fotodiodenzeile (CCD-Zeile), zur Umwandlung des von der Vorlage kommenden Abtastlichts in die Bildsignale sowie ein Abtastobjektiv zur scharfen Abbildung der Vorlage auf den optoelektronischen Wandler sowie zur Einstellung des Abbildungsmaßstabs bei Vorlagen unterschiedlicher Größe bzw. zur Einstellung unterschiedlicher Abtastauflösungen auf. Ein derartiger Scanner ist beispielsweise aus DE 195 34 334 bekannt.

Es gibt Flachbettscanner mit einem feststehenden Vorlagenträger und einer Abtasteinheit, die sich in der Nebenabtastrichtung, d.h. senkrecht zur Richtung der Abtastzeile (der Hauptabtastrichtung) an dem Vorlagenträger entlang bewegt. Diese Bauweise ist für sogenannte Desktop Scanner typisch. Es gibt aber auch Ausführungsformen, bei denen sich der Vorlagenträger an einer feststehenden Abtasteinheit entlang bewegt.

Zur Vorbereitung der Abtastung von Vorlagen müssen die Vorlagen auf den in der Regel transparenten Vorlagenträger montiert werden. Dazu ist es erforderlich, daß der Vorlagenträger mit diffusem Licht beleuchtet wird, um die Vorlagen bei der Montage betrachten und genau ausrichten zu können. Für Flachbettscanner mit beweglichem Vorlagenträger gibt es dafür die Lösung, daß der Vorlagenträger über einen Leuchtkasten positioniert wird. Für Flachbettscanner mit feststehendem Vorlagenträger sind bisher keine Lösungen bekannt.

Aufgabe der vorliegenden Erfindung ist es daher, eine Vorrichtung zur Betrachtung von Vorlagen für einen Flachbettscanner mit einem feststehenden Vorlagenträger und einer beweglichen Abtasteinheit anzugeben.

Diese Aufgabe wird erfindungsgemäß durch die Merkmale des Anspruchs 1 gelöst. Vorteilhafte Weiterbildungen und Ausgestaltungen sind in den Unteransprüchen angegeben.

Der Stand der Technik und die Erfindung wird nachfolgend anhand der Fig. 1 bis 4 näher erläutert.

Es zeigen:
- Fig. 1: eine Vorlagenbetrachtungsvorrichtung nach dem Stand der Technik in einem Flachbettscanner mit einem beweglichen Vorlagenträger,
- Fig. 2: die erfindungsgemäße Vorlagenbetrachtungsvorrichtung für einen Flachbettscanner mit einem feststehenden Vorlagenträger, in der Position für die Montage und Betrachtung der Vorlagen,
- Fig. 3: die erfindungsgemäße Vorlagenbetrachtungsvorrichtung während des Abtastvorgangs, und
- Fig. 4: alternative konstruktive Lösungen für die erfindungsgemäße Vorlagenbetrachtungsvorrichtung.

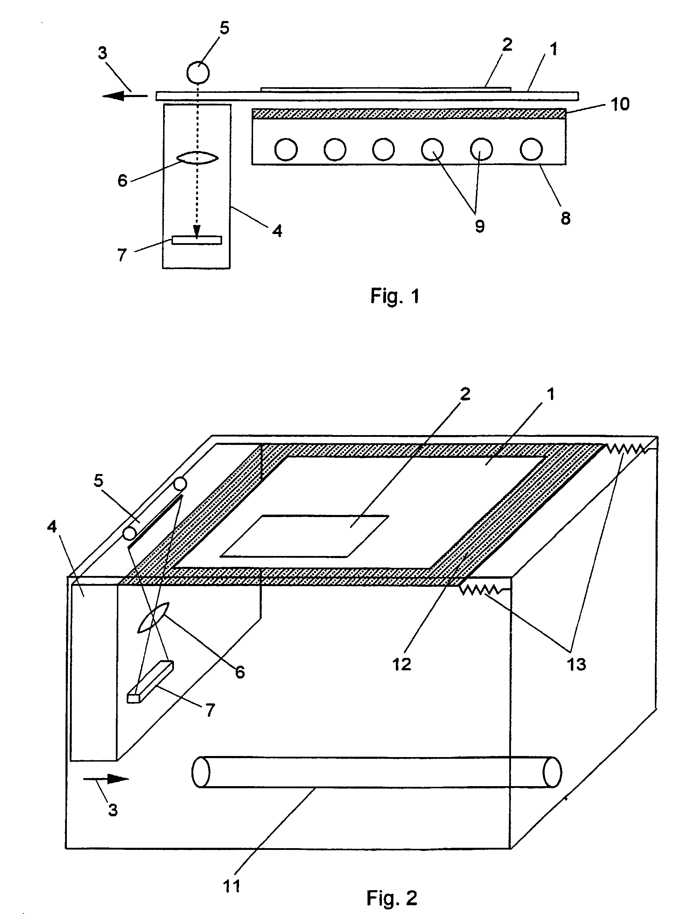

Fig. 1 zeigt eine bekannte Lösung für eine Vorlagenbetrachtungsvorrichtung in einem Flachbettscanner mit einem transparenten, beweglichen Vorlagenträger (1), auf dem eine oder mehrere abzutastende Vorlagen (2) montiert sind. Während des Abtastvorgangs wird der Vorlagenträger (1) in Richtung des Pfeils (3) an der feststehenden Abtasteinheit (4) vorbeibewegt. Eine transparente Vorlage (2) wird von einer Lichtquelle (5) beleuchtet, die oberhalb des Vorlagenträgers (1) angeordnet ist. Das mit dem Bildinhalt der Vorlage (2) modulierte und durch die Vorlage transmittierte Abtastlicht wird durch ein Abtastobjektiv (6) auf einen optoelektronischen Wandler (7) abgebildet, der beispielsweise eine CCD-Zeile ist. Eine nicht-transparente Aufsichtsvorlage wird von einer unterhalb des Vorlagenträgers angeordneten Lichtquelle beleuchtet (in Fig. 1 der Übersichtlichkeit wegen nicht gezeigt). In dem Fall wird das mit dem Bildinhalt der Vorlage (2) modulierte und von der Vorlage reflektierte Abtastlicht durch das Abtastobjektiv (6) auf den optoelektronischen Wandler (7) abgebildet. In der in Fig. 1 gezeigten Position für die Montage und Betrachtung der Vorlagen ist unter dem Vorlagenträger (1) ein Leuchtkasten (8) angeordnet. Die Lichtquellen (9) im Leuchtkasten beleuchten von unten eine Streulichtscheibe (10), die in den Deckel des Leuchtkastens (8) integriert ist. Durch die Streulichtscheibe (10) wird das Licht diffus gestreut, so daß transparente Vorlagen (2) durch den Vorlagenträger hindurch gleichmäßig beleuchtet werden.

Eine solche Lösung für die Vorlagenbetrachtung nach dem Stand der Technik ist nicht verwendbar, wenn der Vorlagenträger (1) feststeht und die Abtasteinheit (4) unter dem Vorlagenträger entlang bewegt wird, da dann ein Leuchtkasten zur Vorlagenbetrachtung die Bewegung der Abtasteinheit (4) blockieren würde.

Fig. 2 zeigt die erfindungsgemäße Vorrichtung zur Vorlagenbetrachtung in einem Flachbettscanner mit einem feststehenden Vorlagenträger (1) und einer beweglichen Abtasteinheit (4). Während des Abtastvorgangs wird die Abtasteinheit (4) in Richtung des Pfeils (3) unter dem Vorlagenträger (1) vorbeibewegt. Eine transparente Vorlage (2) wird von einer Lichtquelle (5) beleuchtet, die oberhalb des Vorlagenträgers (1) angeordnet ist und sich mit der Abtasteinheit (4) bewegt. Das durch die Vorlage (2) transmittierte und modulierte Abtastlicht wird durch das Abtastobjektiv (6) auf den optoelektronischen Wandler (7) abgebildet. Eine nicht-transparente Aufsichtsvorlage wird von einer unterhalb des Vorlagenträgers angeordneten Lichtquelle beleuchtet (in Fig. 2 der Übersichtlichkeit wegen nicht gezeigt).

Fig. 2 zeigt die Abtasteinheit (4) in einer Parkposition, bei der die Vorlagen (2) auf den Vorlagenträger (1) montiert werden können. Zur Beleuchtung der Vorlagen sind eine oder mehrere Lichtquellen (11) unterhalb des Vorlagenträgers (1) so angeordnet, daß die Bewegung der Abtasteinheit (4) nicht behindert wird. Vorzugsweise ist die Lichtquelle (11) deshalb am Boden des Flachbettscanners angebracht. An der Oberkante der Abtasteinheit (4) ist eine Streufolie (12) befestigt, deren gegenüberliegender Rand an der Seite des Flachbettscanners befestigt ist, die der Parkposition der Abtasteinheit (4) gegenüberliegt. Durch Zugfedern (13) oder andere geeignete Spannvorrichtungen wird dafür gesorgt, daß die Streulichtfolie (12) straff unterhalb des Vorlagenträgers (1) gespannt wird, wenn sich die Abtasteinheit (4) in ihrer Parkposition befindet. Durch die Streulichtfolie (12) wird das Licht der Lichtquelle (11) diffus gestreut, so daß transparente Vorlagen (2) durch den Vorlagenträger (1) hindurch gleichmäßig beleuchtet werden. Der freie Raum in dem Flachbettscanner unterhalb des Vorlagenträgers (1) hat dann die Funktion eines Leuchtkastens.

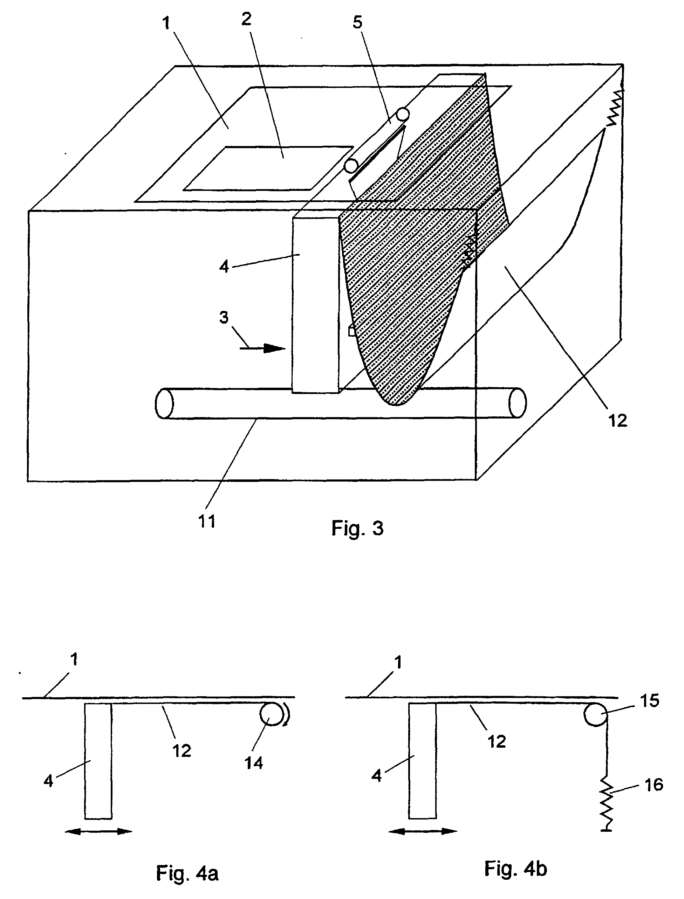

Fig. 3 zeigt die erfindungsgemäße Vorrichtung zur Vorlagenbetrachtung noch einmal während des Abtastvorgangs. Die Abtasteinheit (4) bewegt sich in Richtung des Pfeils (3) unter dem Vorlagenträger (1) und der Vorlage (2) entlang. Dabei wird die Streulichtfolie (12) mit der Bewegung der Abtasteinheit (4) unter dem Vorlagenträger (1) weggezogen, so daß der Lichtweg für das Abtastlicht von der Lichtquelle (5) bis zum optoelektronischen Wandler (7) frei wird.

Fig. 4a und Fig. 4b zeigen alternative Lösungen für die erfindungsgemäße Vorrichtung zur Vorlagenbetrachtung. Bei der Lösung nach Fig. 4a wird die Streulichtfolie (12) mit einer Federmechanik oder einem motorischen Antrieb (14) aufgespult und straff gezogen. Bei der Lösung nach Fig. 4b ist die Streulichtfolie (12) über eine Umlenkrolle (15) geführt und wird mit Zugfedern (16) straff gezogen. Anstelle der Zugfedern (16) könnte auch ein Gewicht zum Spannen der Streulichtfolie (12) verwendet werden. Weitere Ausführungsformen für den Grundgedanken der Erfindung, eine Streulichtfolie (12) mit der Abtasteinheit unter den Vorlagenträger (1) zu ziehen bzw. wegzuziehen, sind denkbar, insbesondere für die konstruktive Ausgestaltung der Führung und Spannung der Streulichtfolie (12).

## Patentansprüche

1. Vorrichtung zur Betrachtung von Vorlagen in einem Flachbettscanner, bestehend aus
- einem ortsfesten Vorlagenträger (1), und
- einer bewegbaren Abtasteinheit (4) mit einer Lichtquelle (5) zur Beleuchtung der abzutastenden Vorlage (2), einem optoelektronischen Wandler (7) zur Umwandlung des von der Vorlage (2) kommenden und mit dem Inhalt der Vorlage (2) modulierten Abtastlichts in ein elektrisches Signal und einem Abtastobjektiv (6) zur Abbildung einer Abtastzeile der Vorlage (2) auf den optoelektronischen Wandler (7), **dadurch gekennzeichnet, daß**
- unterhalb des Vorlagenträgers (1) eine Lichtquelle (11) angebracht ist,
- an der Abtasteinheit (4) eine Streulichtfolie (12) befestigt ist,
- die Streulichtfolie (12) durch die Abtasteinheit (4) unter den Vorlagenträger (1) gezogen wird, wenn die Abtasteinheit (4) in eine Parkposition gebracht wird, und
- die Streulichtfolie (12) durch die Abtasteinheit (4) weggezogen wird, wenn die Abtasteinheit (4) während der Abtastung über den Vorlagenträger (1) bewegt wird.

2. Vorrichtung nach Anspruch 1, **dadurch gekennzeichnet, daß** die Streulichtfolie (12) straff gespannt wird, wenn sich die Abtasteinheit (4) in der Parkposition befindet.

3. Vorrichtung nach Anspruch 1 oder 2, **dadurch gekennzeichnet, daß** die Streulichtfolie (12) durch Federkraft straff gespannt wird.

4. Vorrichtung nach Anspruch 1 oder 2, **dadurch gekennzeichnet, daß** die Streulichtfolie (12) durch Gewichtskraft straff gespannt wird.

5. Vorrichtung nach Anspruch 1 oder 2, **dadurch gekennzeichnet, daß** die Streulichtfolie (12) durch Federkraft aufgespult und straff gespannt wird.

6. Vorrichtung nach Anspruch 1 oder 2, **dadurch gekennzeichnet, daß** die Streulichtfolie (12) durch einen motorischen Antrieb aufgespult und straff gespannt wird.

## Claims

1. Apparatus for viewing copy in a flatbed scanner, comprising
a stationary copy carrier (1) and
a movable scanning unit (4) with a light source (5) for illuminating the copy (2) to be scanned, an optoelectronic converter (7) for converting the scanning light coming from the copy (2) and modulated by the content of the copy (2) into an electrical signal, and a scanning lens (6) for imaging a scanned line of the copy (2) on to the optoelectronic converter (7), **characterized in that**
a light source (11) is mounted underneath the copy carrier (1),
a diffusing foil (12) is attached to the scanning unit (4),
the diffusing foil (12) is drawn under the copy carrier (1) by the scanning unit (4) when the scanning unit (4) is moved to a parked position, and
the diffusing foil (12) is drawn away by the scanning unit (4) when the scanning unit (4) is moved across the copy carrier (1) during scanning.

2. Apparatus according to Claim 1, **characterized in that** the diffusing foil (12) is pulled taut when the scanning unit (4) is in the parked position.

3. Apparatus according to Claim 1 or 2, **characterized in that** the diffusing foil (12) is pulled taut by spring force.

4. Apparatus according to Claim 1 or 2, **characterized in that** the diffusing foil (12) is pulled taut by gravitational force.

5. Apparatus according to Claim 1 or 2, **characterized in that** the diffusing foil (12) is wound up and pulled taut by spring force.

6. Apparatus according to Claim 1 or 2, **characterized in that** the diffusing foil (12) is wound up and pulled taut by a motorized drive.

## Revendications

1. Dispositif pour contrôler un original placé sur un scanner à plat comprenant :
- un support fixe d'original (1) et
- une unité de détection (4) mobile comportant une source lumineuse (5) pour éclairer l'original (2) à détecter, un convertisseur optoélectronique (7) pour convertir la lumière de détection venant de l'original (2) et modulée par le contenu de l'original (2) en un signal électrique, ainsi qu'un objectif de détection (6) pour former l'image d'une ligne de détection de l'original (2) sur le convertisseur optoélectronique (7),
**caractérisé en ce que**
- en dessous du support (1) de l'original on a une source lumineuse (11),
- un film de diffusion de lumière (12) est fixé sur l'unité de détection (4),
- le film de diffusion de lumière (12) est tiré à travers l'unité de détection (4) sous le support d'original (1) lorsque l'unité de détection (4) est mise en position de repos, et
- le film de diffusion (12) est extrait par l'unité de détection (4) lorsque l'unité de détection (4) parcourt le support d'original (1) pendant la détection.

2. Dispositif selon la revendication 1,
**caractérisé en ce que**
le film de diffusion de lumière (12) est tendu fermement lorsque l'unité de détection (4) est en position de repos.

3. Dispositif selon les revendications 1 ou 2,
**caractérisé en ce que**
le film de diffusion de lumière (12) est tendu fermement par la force d'un ressort.

4. Dispositif selon les revendications 1 ou 2,
**caractérisé en ce que**
le film de diffusion de lumière (12) est tendu fermement par un poids.

5. Dispositif selon les revendications 1 ou 2,
**caractérisé en ce que**
le film de diffusion de lumière (12) est bobiné par la force d'un ressort et est tendu fermement.

6. Dispositif selon les revendications 1 ou 2,
**caractérisé en ce que**
le film de diffusion de lumière (12) est enroulé par un moteur et est tendu fermement.
